# EUROPEAN PATENT SPECIFICATION

(11) **EP 2 595 160 B1**
(45) Date of publication and mention of the grant of the patent: **31.07.2019**
(21) Application number: 11806978.0
(22) Date of filing: 22.06.2011
(51) Int. Cl.: H01F 38/14, H01F 27/26, H01F 41/02, H01F 27/36, H01F 27/28, H02J 5/00, H04B 5/00, H02J 50/10, H02J 7/02, H02J 50/40, H02J 50/12, H02J 50/70, H02J 50/80

(54) **CORE ASSEMBLY FOR WIRELESS POWER COMMUNICATION, AND POWER SUPPLY DEVICE FOR WIRELESS POWER COMMUNICATION HAVING THE SAME**
KERNANORDNUNG FÜR DRAHTLOSE STROMÜBERTRAGUNG UND STROMVERSORGUNGSVORRICHTUNG FÜR DRAHTLOSE STROMÜBERTRAGUNG DAMIT
ENSEMBLE NOYAU POUR TRANSMISSION D'ÉNERGIE SANS FIL ET DISPOSITIF D'ALIMENTATION ÉLECTRIQUE POUR TRANSMISSION D'ÉNERGIE SANS FIL LE COMPRENANT

(30) Priority: 16.07.2010 KR 20100068924
(43) Date of publication of application: 22.05.2013
(73) Proprietor: GE Hybrid Technologies, LLC, Niskayuna, New York 12309 (US)
(72) Inventor: KUK, Yoon Sang, Seoul 156-070 (KR); JUNG, Chun Kil, Seoul 135-080 (KR)
(74) Representative: Dennemeyer & Associates S.A.
(86) International application number: PCT/KR2011/004561
(87) International publication number: WO 2012/008693

(56) References cited:
- JP-A- 11 265 814
- JP-A- 2004 255 182
- JP-A- 2009 252 970
- KR-B1- 100 971 705
- US-A1- 2001 002 789
- US-A1- 2010 033 282
- US-B1- 6 424 116

## Description

### [Technical Field]

The present invention relates to a core assembly for wireless power communication used in a wireless power communication system and a power supplying device for wireless power communication having the same.

### [Background Art]

Generally, a portable electronic device such as a mobile communication terminal, a personal digital assistant (PDA), or the like, is mounted with a rechargeable secondary battery as a battery. In order to charge the battery, a separate charging device providing electrical energy to the battery of the portable electronic device using home commercial power is required.

Typically, the charging device and the battery includes separate contact terminals formed at outer portions thereof, respectively, such that the charging device and the battery are electrically connected to each other by connecting the contact terminals to each other. However, when the contact terminals as described above are protruded to the outside, the contact terminals are not attractive in view of appearance and are contained with external foreign materials, such that a contact state therebetween easily becomes bad. In addition, when the battery is short-circuited or exposed to moisture due to carelessness of a user, charged energy may be easily lost.

As an alternative to the above-mentioned contact type charging scheme, a non-contact type (wireless) charging system charging the battery in a scheme in which the contact terminals of each of the charging device and the battery do not contact each other has been suggested. Further examples of core assemblies for wireless power communication devices are known from US 6424115 and US 2010/033282.

### [Disclosure]

### [Technical Problem]

An object of the present invention is to provide a core assembly for wireless power communication in which coils may be disposed so as to effectively reduce a dark area that may be a hindrance in wireless power transmission to a power receiving device and the disposition of the coils may be stably maintained and a power supply device for wireless power communication having the same.

### [Technical Solution]

According to the present invention, there is provided a core assembly for wireless power communication defined in independent claim 1. Embodiments of the present invention are defined in the dependent claims. A plate shaped core including concave parts is provided in a main surface thereof and made of a magnetic material; a plurality of winding type coils is received in the concave parts and disposed to be mutually partially overlapped with each other; and a circuit board provided beneath the plate shaped core is connected to both ends of each of the coils to control application of a power to the coils.

The concave parts include: a first concave part formed at a first depth; and a second concave part formed to be in communication with the first concave part and having a second depth shallower than the first depth.

The concave parts are formed to have a curve shape contour. The first and second concave parts are formed by being recessed in a form in which the contours of the concave parts are partially overlapped with each other.
an outer circumference entirely formed by the plurality of coils overlapped with each other to contact the sidewall.

The coils may be wound in an oval shape, respectively.

The plurality of coils may be wound so as to have the same size as each other.

The core may include at least one support protruded therefrom, wherein the support is formed to be inserted into a hollow part of the coil.

A least one section of a cross section of the support may be formed in a curved shape so as to contact a portion of an inner circumferential surface of the hollow part of the coil.

The core may be provided with a plurality of first through-holes through which both ends of each of the coils penetrate, and the circuit board may be provided with a plurality of second through-holes corresponding to the plurality of first through-holes.

The plurality of first through-holes may include at least one pair of through-holes symmetrical to each other based on the center of the core.

A surface of the circuit board opposite to another surface thereof facing the core may be provided with a plurality of connection parts formed so as to be connected to both ends of each of the coils and correspond to the number of both ends.

The concave parts may include grooves formed in a lower surface thereof in a direction in which the coils are wound to receive portions of the coils contacting the lower surface therein.

According to another exemplary embodiment of the present invention, there is provided a power supplying device for wireless power communication including: the core assembly for wireless power communication as described above including a charging power supplying circuit formed on the circuit board; and a housing formed to enclose the core assembly. According to an example, there is provided a method for manufacturing a core assembly for wireless power communication, the method including: adding binders to powders which are magnetic materials to form a mixture; putting the mixture in a mold and pressing the mixture to mold the mixture to become a core having concave parts formed in one surface thereof; sintering the molded core; disposing a plurality of coils wound in the concave parts of the sintered core so as to be partially overlapped with each other; and connecting both ends of each of the coils to a circuit board.

The powders may include manganese and zinc.

The sintering of the molded core may include maintaining a sintering temperature at a temperature of 60 to 80 °C.

### [Advantageous Effects]

With the core assembly for wireless power communication, the power supplying device for wireless power communication having the same, and the examplary method for manufacturing the same, the coils may be disposed so as to effectively reduce a dark area that may be a hindrance in wireless power transmission to a power receiving device and the disposition of the coils may be stably maintained.

### [Description of Drawings]

FIG. 1 is a schematic perspective view of a wireless power communication system according to an exemplary embodiment of the present invention;
FIG. 2 shows an example of an internal functional block diagram of the wireless power communication system of FIG. 1;
FIG. 3 is an assembled perspective view of a core assembly for wireless power communication according to the exemplary embodiment of the present invention viewed from a front surface;
FIG. 4 is an assembled perspective view of the core assembly of FIG. 3 viewed from a rear surface;
FIG. 5 is an exploded perspective view of the core assembly of FIG. 3;
FIG. 6 is a perspective view showing a core 120' according to a modified example of a core 120 of FIG. 3;
FIG. 7 is a partial conceptual diagram showing a state in which a coil 111 is seated on the core 120' of FIG. 6; and
FIG. 8 is a flow chart showing an example of a method for manufacturing a core assembly.

### [Best Mode]

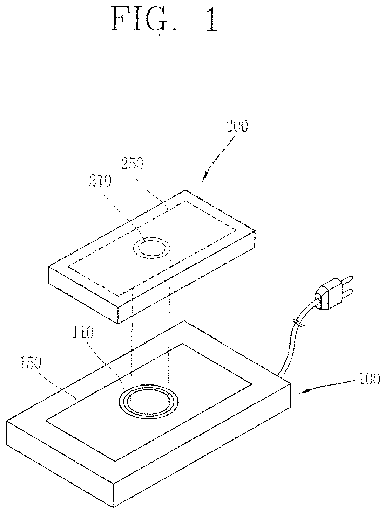

Hereinafter, a core assembly for wireless power communication according to embodiments of the present invention, a power supplying device for wireless power communication having the same, and an example of a method for manufacturing the same will be described in detail with reference to the accompanying drawings. In the present specification, throughout the exemplary embodiments of the present invention, similar components will be denoted by the same or similar reference numerals and a description thereof will be replaced by a first description FIG. 1 is a schematic perspective view of a wireless power communication system according to an exemplary embodiment of the present invention.

As shown in FIG. 1, the wireless power communication system is configured to include a power supplying device 100 and a power receiving device 200 receiving power from the power supplying device 100 without a contact in order to charge a battery.

The power supplying device 100 is a device receiving electrical energy supplied from an external power supply to generate charging power to be supplied to the power receiving device 200. The power supplying device 100 may be formed in a pad shape in which the power receiving device 200 may be easily seated thereon. As external power supplied to the power supplying unit 100, commercial alternate current (AC) power (60Hz, 220V/100V) or direct current (DC) power may be used.

As an example, the power receiving device 200 includes a battery pack in which the battery is embedded or a portable electronic device in which a battery is embedded. In addition, the power receiving device 200 may be a portion of the portable electronic device connected to the battery or a member connected to the battery separately from the portable electronic device. An example of the portable electronic device may include a cellular phone, a personal digital assistant (PDA), an MP3 player, or the like. The battery, which is a rechargeable battery cell, may include a lithium ion battery, a lithium polymer battery, or the like.

The power supplying device 100 and the power receiving device 200 may include a primary coil 110 and a secondary coil 210 corresponding to each other, respectively. The primary and secondary coils 110 and 210 are magnetically coupled with each other by induction coupling. Therefore, the secondary coil 210 is juxtaposed on the primary coil 110, such that a magnetic field generated by the primary coil 110 induces an induced current in the secondary coil 210.

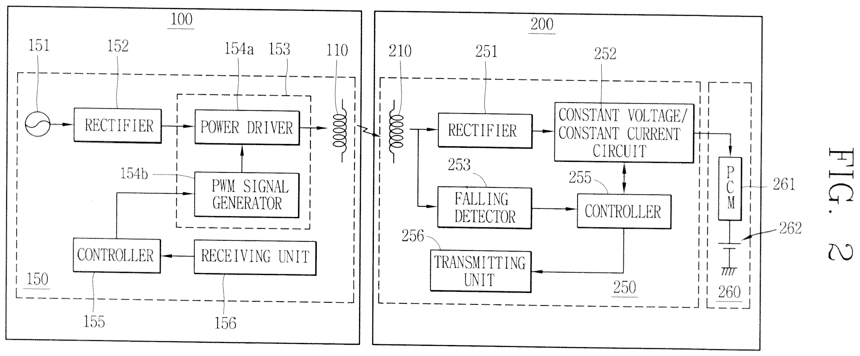

The power supplying device 100 includes a charging power supplying circuit 150 (See FIG. 2) embedded therein in order to drive the primary coil 110 to generate the magnetic field. The power receiving device 200 includes a charging circuit 250 (See FIG. 2) embedded therein in order to charge the battery using induced electromotive force induced by the secondary coil 210.

Hereinafter, referring to FIG. 2, examples of detailed configurations of the charging power supplying circuit 150 and the charging circuit 250 will be described. FIG. 2 is an internal functional block diagram of the wireless power communication system of FIG. 1.

Referring to FIG. 2, the charging power supplying circuit 150 embedded in the power supplying device 100 may be configured to include the primary coil 110, a rectifier 152, a driving circuit 153, a controller 155, and a wireless receiving module 156.

The rectifier 152 rectifies an AC voltage from a commercial AC power supply 151 into a DC voltage and then transfers the DC voltage to the driving circuit 153. The driving circuit 153 generates an AC voltage pulse having a high frequency equal to or larger than a commercial frequency using the DC voltage rectified by the rectifier 152 and applies the AC voltage pulse to the primary coil 110 to generate the magnetic field.

The driving circuit 153 may include a power driver 154a and a pulse width modulation (PWM) signal generator 154b. The power driver 154b may include a high frequency oscillating circuit converting a predetermined level of DC voltage to oscillate an AC voltage having a high frequency equal to or larger than a commercial frequency and a drive circuit applying a pulse width modulated high frequency AC voltage pulse to the primary coil 110 to drive the primary coil 110. The PWM signal generator 154b modulates a pulse width of the high frequency AC voltage. Therefore, an output signal output from an output terminal of the power driver 154a becomes a high frequency AC voltage pulse. The high frequency AC voltage pulse may be a pulse train of which a pulse width may be controlled by the controller 155. As the driving circuit 153 described above, for example, a switching mode power supply (SMPS) may be adopted.

The controller 155 controls a pulse width of the pulse width modulated high frequency AC voltage pulse based on information on a charged state of the battery fed back through a wireless transmitting module 256 and the wireless receiving module 156. For example, the controller 155 changes a driving mode of the primary coil 110 from a standby mode into a charging mode in the case in which a response signal fed back from the charging circuit 250 is a charging start signal. In addition, the controller 155 changes the driving mode of the primary coil 110 from the charging mode to a fully charged mode in the case in which it is judged that the battery is fully charged as a result of analyzing the information on the charged state fed back from the charging circuit 250. For example, the controller 155 maintains the driving mode of the primary coil 110 in the standby mode in the case in which a response signal fed back from the charging circuit 250 is not present.

The wireless receiving module 156 may include a receiving unit such as a demodulator demodulating a feedback response signal transmitted from the wireless transmitting module 256 of the charging circuit 250 as the primary coil 110 receives the feedback response signal, thereby reconstructing the information on the charged state of the battery 262. The wireless receiving module 156 may also include an antenna receiving the feedback response signal transmitted from the wireless transmitting module 256 of the charging circuit 250, separately from the primary coil 110.

The charging power supplying circuit 150 described above may further include an over-current filter circuit for protecting the circuit from an over-current or a constant voltage circuit for maintaining the DC voltage rectified by the rectifier at a predetermined level of voltage. The over-current filter circuit may be disposed between the commercial AC power supply 151 and the rectifier 152, and the constant voltage circuit may be disposed between the rectifier 152 and the driving circuit 153.

Next, the charging circuit 250 receiving the power supplied from the charging power supplying circuit 150 to charge the battery 262 will be described. This charging circuit 250 includes the power receiving device 200 embedded therein.

The charging circuit 250 may include the secondary coil 210, a rectifier 251, a constant voltage/constant current circuit 252, a falling detector 253, a controller 255, and the wireless transmitting module 256.

The secondary coil 210 is magnetically coupled with the primary coil 110 to generate induced electromotive force. As described above, since a power signal applied to the primary coil 110 is the pulse width modulated signal, the induced electromotive force induced in the secondary coil 210 is also an AC voltage pulse train. In addition, an AC voltage pulse induced in the secondary coil 210 according to the driving mode of the primary coil 110 also takes any one of the standby mode, the charging mode, and the fully charged mode.

The rectifier 251 is connected to an output terminal of the secondary coil 210 and planarizes the AC voltage pulse induced by the secondary coil 210 to a predetermined level of DC voltage. The constant voltage/constant current circuit 252 generates a constant voltage and a constant current to be charged in the battery 262 using the predetermined level of DC voltage. More specifically, the constant voltage/constant current circuit 252 maintains a current constant mode at the time of an initial charged time of the battery 262 and then changes the constant current mode into a constant voltage mode when a charged voltage of the battery 262 is in a saturated state.

The falling detector 253 is a device detecting a descent time of the AC voltage pulse induced by the secondary coil 210, in other words, a falling time. A falling detecting signal is input to the controller 255.

The controller 255, which is a kind of microprocessor, receives monitoring signals such as the falling detecting signal, a charged current, a charged voltage, and the like, and controls the constant voltage/constant current circuit 252 and the wireless transmitting module 256 based on the monitoring signal. For example, the controller 255 recognizes the descent time of the pulse based on the falling detecting signal input from the falling detector 253 and synchronizes a transmission time of the feedback response signal to be transmitted to the charging power supplying circuit 150 with the descent time of the pulse. The controller 255 monitors the charged current and the charged voltage of the battery 262 and temporally stores the monitored value in an internal memory (not shown). The memory (not shown) may store specification information (a product code, a rating, and the like) of the battery 262 as well as the information on the charged state of the battery 262 such as the monitored charged current and charged voltage therein.

In addition, the controller 255 appropriately selects the constant voltage mode or the constant current mode and changes between the constant voltage mode and the constant current mode, according to the charged state of the battery 262. The controller 255 monitors whether an excessive voltage is applied to both ends of the constant voltage/constant current circuit 252 and generates a request signal for adjusting the charged power when the excessive voltage is applied to both ends of the constant voltage/constant current circuit 252. The request signal is fed back to the charging power supplying circuit 150 of the power supplying device 100 through the wireless transmitting module 256.

The monitoring operation on the voltage at both ends of the constant voltage/constant current circuit 252 is performed by measuring a voltage at a front end and a voltage at a rear end of the constant voltage/constant current circuit 252 and inspecting whether or not a difference between the front and rear voltages exceeds a reference voltage. The wireless transmitting module 256 includes a transmitting unit demodulating a base band signal such as the information on the charged state when the secondary coil 210 transmits the feedback response signal (a charging start signal, a charged state signal, and an adjustment request signal) to be transmitted to the charging power supplying circuit 150, thereby generating the feedback response signal. The wireless transmitting module 256 may also include an antenna transmitting the feedback response signal to be transmitted to the charging power supplying circuit 150, separately from the secondary coil 210.

A protective circuit module (PCM) 261 for preventing an over-voltage or an over-current from being applied to the battery 262 is disposed between the constant voltage/constant current circuit 252 and the battery 262. The protective circuit module 261 and the battery 262 may constitute a battery unit 260.

Hereinafter, the power supplying device 100 will be described in more detail.

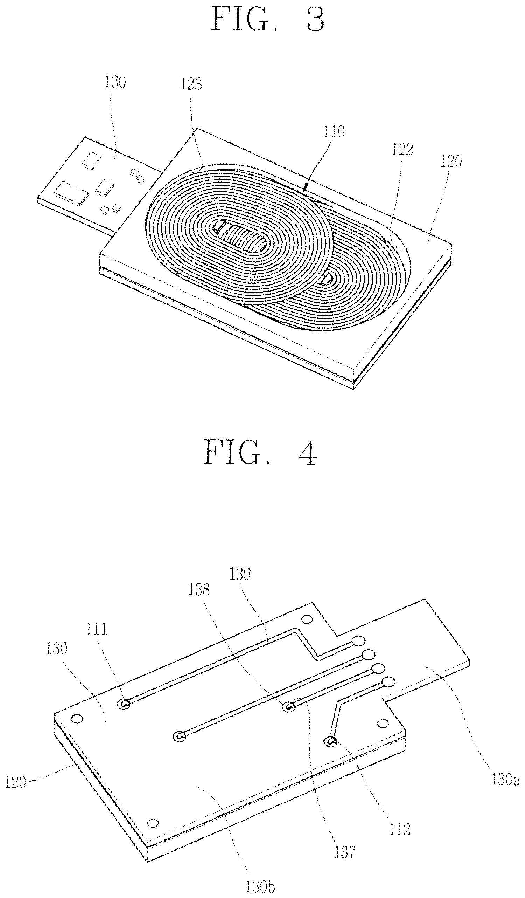

FIG. 3 is an assembled perspective view of a core assembly for wireless power communication according to the exemplary embodiment of the present invention viewed from a front surface.

The power supplying device 100 according to the embodiment of the present invention includes a core assembly to be described with reference to FIG. 3, or the like, and a housing (See FIG .1) enclosing the core assembly to form an appearance.

The core assembly may include a plurality of coils 110, a plate shaped core 120, and a circuit board 130.

The coils 110 are formed in a winding form having two free ends. The coils 110 are also provided in plural. Coils 110 adjacent to each other among the plurality of coils 110 are disposed to be partially overlapped with each other. In the present embodiment, a form in which two coils 110 are partially overlapped with each other is illustrated.

The core 120 may be formed in a plate shape. In the present embodiment, the case in which the core 120 substantially has a rectangular parallelepiped is illustrated. A wide surface of the core 120, in other words, a main surface of the core 120 is provided with concave parts 122 and 123 for receiving the coils 110. The core 120 is made of a magnetic material to reduce the possibility that a magnetic field by current flowing in the received coil 110 will deviate from a direction toward the power receiving device 200 (See FIG. 1).

The circuit board 130 is positioned beneath the core 120. One portion of the circuit board 130 supports the core 120 beneath the core 120. The circuit board 130 includes a control circuit embedded in another portion thereof in order to control application of the power to the coil 110. The control circuit includes the charging power supplying circuit 150 (See FIG. 2).

FIG. 4 is an assembled perspective view of the core assembly of FIG. 3 viewed from a rear surface.

Referring to FIG. 4, both ends of each of the coils 110 are extended while penetrating through the core 120 and the circuit board 130. More specifically, both ends of the coils 110 penetrate through through-holes 137 formed in a lower surface (a surface opposite to another surface facing the core 120) of the circuit board 130. Here, the free ends of the coils 110 are connected to connection parts 138 formed to be adjacent to the through-holes 137 and formed to enclose the through-holes 137 in FIG. 4.

The connection parts 138 are connected to conductive patterns 13 9 extended from one portion 130b of the circuit board 130 toward another portion 130a thereof. Therefore, the charging power supplying circuit 150 (See FIG. 2) formed at another portion 130a of the circuit board 130 is connected to the coil 110 to control the coil 110.

Here, two through-holes 137 adjacent to each other are disposed at an upper area based on a central line of the circuit board 130. Another pair of through-holes 137 adjacent to each other is disposed at a lower area based on the above-mentioned central line. Therefore, the conductive patterns 139 may be separately formed at different areas.

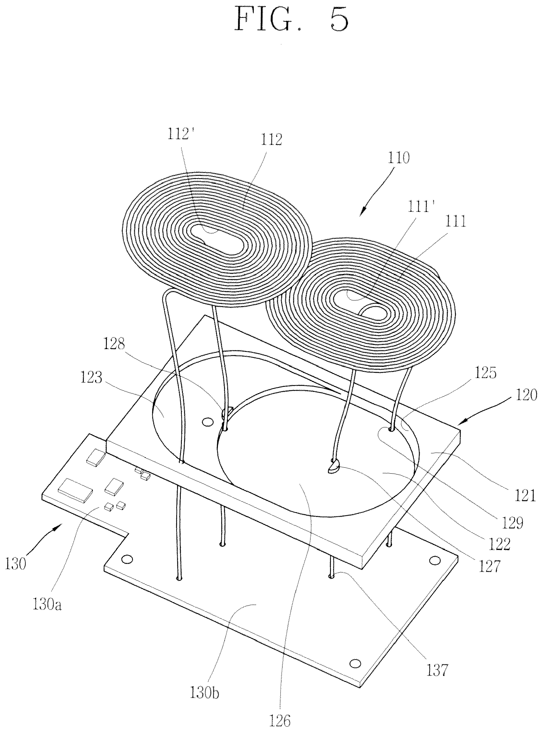

FIG. 5 is an exploded perspective view of the core assembly of FIG. 3.

Referring to FIG. 5, the coil 110 may be configured of a pair of coils, in other words, a first coil 111 and a second coil 112. The first and second coils 111 and 112 may include hollow parts 111' and 112' formed at central portions thereof, respectively. Areas of the hollow parts 111' and 112' may be adjusted by degrees of winding in the coils 111 and 112.

The first and second coils 111 and 112 may be wound to have substantially the same size. Each of the first and second coils 111 and 112 is wound to form one plane. The planes formed by the first and second coils 111 and 112 may be disposed in parallel with each other (See FIG. 3).

The first and second coils 111 and 112 may be formed in an oval shape. This is to maximize a size in a length direction occupied by the first and second coils 111 and 112 overlapped with each other while maximizing an overlapped area between the first and second coils 111 and 112.

The core 120 substantially has the rectangular parallelepiped shape as described above. The main surface 121 of the core 120 is provided with the concave parts 122 and 123 receiving the coils 110. The concave parts 122 and 123 may include a first concave part 122 recessed at a first depth and a second concave part 123 recessed at a second depth. In the present embodiment, the first coil 111 is received in the first concave part 122 and the second coil 112 is received in the second concave part 123. Here, since the first coil 111 is positioned under the second coil 112, it is preferable that the first depth is deeper than the second depth.

Again referring to FIG. 5, the concave parts 122 and 123 are formed by being recessed to have a closed curve shaped contour, more specifically, an oval contour. When the entire concave parts 122 and 123 form a large oval contour, each of the first and second concave parts 122 and 123 form a contour in which small ovals inscribed in the large oval are partially overlapped with each other. The small ovals are recessed at the first and second depths described above, respectively. The overlapped part between the small ovals may be recessed at the first depth and be defined as a portion of the first concave part 122.

The concave parts 122 and 123 may have a size enough to slightly tightly receive an outer circumference of an assembly in which the first and second coils 111 and 112 partially overlapped with each other are entirely formed. Therefore, the first and second coils 111 and 112 are only received in the concave parts 122 and 123, such that they may be maintained at a predetermined position in the power supplying device 100.

The concave parts 122 and 123 have a sidewall 125 and a bottom 126 in a shape thereof. The sidewall 125 has a height corresponding to the depths at which the concave parts 122 and 123 are recessed. The sidewall 125 may have a size corresponding to a thickness of the coil 110 to block or alleviate a phenomenon in which a magnetic field generated in the coil 110 is leaked in a direction toward the sidewall 125. The sidewall 125 contacts the outer circumference of the tightly received coil 110 as described above to allow the coil 110 to be seated at a predetermined position.

The concave parts 122 and 123 may include supports 127 and 128 protruded from a bottom 126 thereof, respectively. The supports 127 and 128 may be formed at positions at which they may be inserted into the hollow part 111' of the first coil 111 or the hollow part 112' of the second coil 112. Therefore, the supports 127 and 128 may allow the first coil 111 or the second coil 112 not to be separated at a predetermined position, thereby maintaining a disposition relationship between the first and second coils 111 and 112 as set.

The supports 127 and 128 may have a shape corresponding to shapes of inner circumferential surfaces of the hollow parts 111' and 112' of the coils 110, respectively. In the present embodiment, outer circumferences of the supports 127 and 128 have a curved section, corresponding to the inner circumferential surfaces of the hollow parts 111' and 112' having a curved shape. A side opposite to the curved section of the supports 127 and 128 may be a straight line section in order to secure a space for avoiding interference with an outer circumference of the coil 110. Therefore, each of the supports 127 and 128 may be a protrusion extended in a state in which it entirely has a semi-circular cross-section.

The bottom 126 of the concave parts 122 and 123 may be provided with first through-holes 129 through which both ends of the coils 111 and 112 penetrate. The circuit board 130 may be provided with second through-holes 137 corresponding to the first through-holes 129. Although the coils 111 and 112 have been represented at an intentionally exaggerated length in FIG. 5 in order to show a form in which both end of the coils 111 and 112 penetrate through the through-holes 129 and 137, it may be sufficiently understood by those skilled in the art with reference to the assembled view of FIG. 3 that the coils 111 and 112 need not to be long as shown in FIG. 5.

The number of first through holes 129 are four, that is, one pair corresponding to both ends of the first coil 111 and another pair corresponding to both ends of the second coil 112. The respective pairs of through-holes 129 may be disposed in a form similar to each other. More specifically, any ones of the respective different pairs of through-holes 129 may be symmetrical to each other and the other ones of the respective different pairs of through-holes 129 may also be symmetrical to each other, based on the center of the core 120. The through-holes 129 are symmetrical to each other as described above, which may be associated with that the first and second coils 111 and 112 are formed to have a shape similar to each other. In this case, inconvenience that the first and second coils 111 and 112 should be intentionally separately assembled at the time of being assembled may be removed.

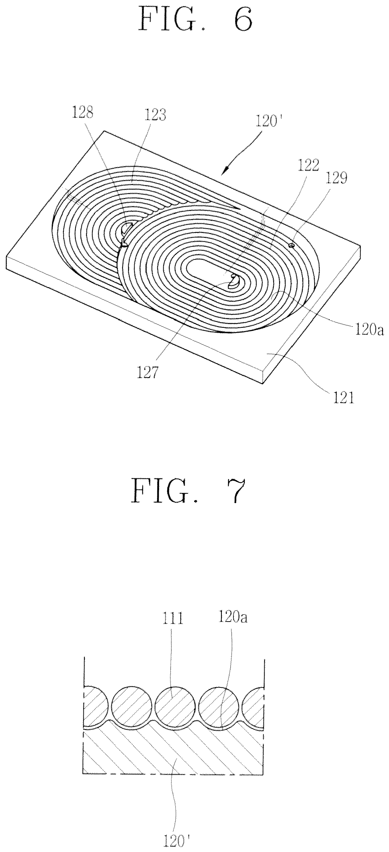

FIG. 6 is a perspective view showing a core 120' according to a modified example of a core 120 of FIG. 3; and FIG. 7 is a partial conceptual diagram showing a state in which a coil 111 is seated on the core 120' of FIG. 6.

Referring to FIG. 6, in the core 120', grooves 120a may be formed in the concave parts 122 and 123 in a direction in which the coils 111 and 112 (See FIG. 3) are wound.

In FIG. 6, the case in which the grooves 120a are formed in the second concave part 123 as well as the first concave part 122 is illustrated. However, the grooves 120a may not also be necessarily formed in all concave parts 122 and 123.

Referring to FIG. 7, the coils 111 and 112 may be seated on the groove 120a. Therefore, the grooves 120a may assist in maintaining the coils 111 and 122 at a predetermined position together with the supports 127 and 128 (See FIG. 5).

In addition, the coils 111 and 112 are seated on the grooves 120a, such that copper loss of the coils 111 and 112 may be reduced.

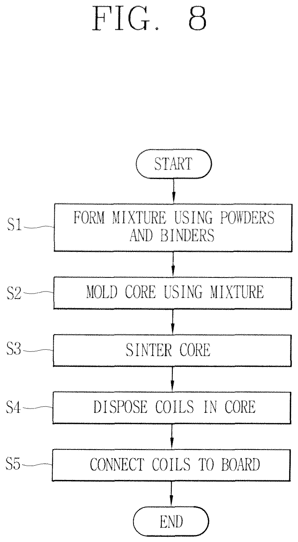

FIG. 8 is a flow chart showing an example of a method for manufacturing a core assembly for wireless power communication.

Referring to FIG. 8, in the method for manufacturing the core assembly for wireless power communication described above, it may be required to manufacture the core 120 or 120'.

In order to manufacture the core 120 or 120', powders and binders are mixed with each other to form a mixture (S1). Here, the powder may include a material allowing the core 120 or 120' to have magnetism. To this end, in the present embodiment, the powder may include manganese-zinc components.

The mixture should be molded to have a shape of the core 120 or 120' (S2). To this end, the mixture may be put in a mold and pressed to thereby be molded in the shape of the core 120 or 120'. Through the above-mentioned pressing, the core 120 or 120' may be molded to have the concave parts 122 and 123, the supports 127 and 128, and the through-holes 129.

The molded core 120 or 120' is subjected to a sintering process (S3). In the sintering process, the manganese-zinc powder may be maintained at a low temperature, for example, a temperature of 60 to 80 °C.

The coils 110 are disposed in the concave parts 122 and 123 of the sintered core 120 or 120' (S4).

Both ends of the coils 110 are connected to the connection parts 138 formed at the lower surface of the circuit board 130 through the through-holes 129 of the core 120 or 120' and the through-holes 137 of the circuit board 130 (S5).

The core assembly for wireless power communication, the power supplying device for wireless power communication having the same, and the method for manufacturing the same as described above are not limited to the configuration and the operation scheme of the above-mentioned exemplary embodiments. The above-mentioned exemplary embodiments may also variously modified through a selective combination of all or some thereof.

## Claims

1. A core assembly for wireless power communication comprising:
a plate shaped core (120) made of a magnetic material, the plate shaped core including concave parts (122, 123) provided in a main surface thereof; and
a plurality of winding type coils (110) received in the concave parts and partially overlapped with each other,
wherein the concave parts include:
a first concave part which is formed at a first depth having a first curved contour; and
a second concave part formed to be in communication with the first concave part, the second concave part is formed at a second depth having a second curved contour, the second depth being shallower than the first depth, and
wherein the first and second concave parts are formed by being recessed in a form in which the contours of the first concave part and the second concave part partially overlap each other; and
a circuit board (130) is positioned beneath the plate shaped core, the circuit board being connected to both ends of each of the coils to control application of a power to the coils.

2. The core assembly for wireless power communication of claim 1, wherein portions at which the contours of the first concave part and the second concave part partially overlap each other are recessed at the first depth.

3. The core assembly for wireless power communication of claim 1, wherein the concave parts (122, 123) includes a bottom (126) and a sidewall (125), and
the concave parts are recessed at a size allowing an outer circumference entirely formed by the plurality of coils overlapped with each other to contact the sidewall.

4. The core assembly for wireless power communication of claim 1, wherein the coils are wound in an oval shape, respectively.

5. The core assembly for wireless power communication of claim 4, wherein the plurality of coils are wound so as to have the same size as each other.

6. The core assembly for wireless power communication of claim 1, wherein the core includes at least one support(127, 128) protruding therefrom, the support being formed to be inserted into a hollow part of the coil.

7. The core assembly for wireless power communication of claim 6, wherein at least one section of a cross section of the support is formed in a curved shape so as to contact a portion of an inner circumferential surface of the hollow part of the coil.

8. The core assembly for wireless power communication of claim 7, wherein the core is provided with a plurality of first through-holes (129) through which both ends of each of the coils penetrate, and
the circuit board (130) is provided with a plurality of second through-holes (127) corresponding to the plurality of first through-holes.

9. The core assembly for wireless power communication of claim 8, wherein the plurality of first through-holes include at least one pair of through-holes symmetrical to each other based on the center of the core.

10. The core assembly for wireless power communication of claim 8, wherein a surface of the circuit board, opposite to another surface thereof facing the core, comprises a plurality of connection parts which are connected to both ends of each of the coils, the number of connection parts corresponding to the number of ends.

11. The core assembly for wireless power communication of claim 1, wherein the concave parts include grooves (120a) formed in a lower surface thereof in a direction in which the coils are wound to receive portions of the coils contacting the lower surface therein.

12. A power supplying device (100) for wireless power communication comprising:
the core assembly for wireless power communication of claim 1; and
a housing formed to enclose the core assembly.

## Patentansprüche

1. Kernanordnung für drahtlose Energieübertragung, umfassend:
einen plattenförmigen Kern (120), der aus magnetischem Material hergestellt ist, wobei der plattenförmige Kern konkave Teile (122, 123) beinhaltet, die in einer Hauptoberfläche davon bereitgestellt sind; und
eine Vielzahl von wicklungsartigen Spulen (110), die in den konkaven Teilen aufgenommen werden und sich teilweise überlappen,
wobei die konkaven Teile beinhalten:
einen ersten konkaven Teil, der in einer ersten Tiefe ausgebildet ist, die eine erste gekrümmte Kontur aufweist; und
einen zweiten konkaven Teil, der so ausgebildet ist, dass er mit dem ersten konkaven Teil in Verbindung ist, wobei der zweite konkave Teil in einer zweiten Tiefe ausgebildet ist, die eine zweite gekrümmte Kontur aufweist, wobei die zweite Tiefe seichter als die erste Tiefe ist, und
wobei der erste und zweite konkave Teil ausgebildet werden, indem sie in einer Form versenkt werden, in der sich die Konturen des ersten konkaven Teils und des zweiten konkaven Teils teilweise überlappen; und
eine Leiterplatte (130) unterhalb des plattenförmigen Kerns positioniert ist, wobei die Leiterplatte an beide Enden von jeder der Spulen angeschlossen ist, um das Anlegen einer Energie an die Spulen zu steuern.

2. Kernanordnung für drahtlose Energieübertragung nach Anspruch 1, wobei Abschnitte, in denen sich die Konturen des ersten konkaven Teils und des zweiten konkaven Teils teilweise überlappen, in der ersten Tiefe versenkt sind.

3. Kernanordnung für drahtlose Energieübertragung nach Anspruch 1, wobei die konkaven Teile (122, 123) einen Boden (126) und eine Seitenwand (125) beinhalten, und
die konkaven Teile in einer Größe versenkt sind, die es ermöglicht, dass ein äußerer Umfang, der zur Gänze von der Vielzahl von sich überlappenden Spulen ausgebildet wird, die Seitenwand berührt.

4. Kernanordnung für drahtlose Energieübertragung nach Anspruch 1, wobei die Spulen jeweils in einer ovalen Form gewickelt sind.

5. Kernanordnung für drahtlose Energieübertragung nach Anspruch 4, wobei die Vielzahl von Spulen so gewickelt ist, dass sie jeweils die gleiche Größe aufweisen.

6. Kernanordnung für drahtlose Energieübertragung nach Anspruch 1, wobei der Kern mindestens eine davon vorstehende Halterung (127, 128) beinhaltet, wobei die Halterung so ausgebildet ist, dass sie in einen hohlen Teil der Spule eingefügt werden kann.

7. Kernanordnung für drahtlose Energieübertragung nach Anspruch 6, wobei mindestens ein Bereich eines Querschnitts der Halterung in einer gekrümmten Form ausgebildet ist, sodass er einen Abschnitt einer inneren Umfangsfläche des hohlen Teils der Spule berührt.

8. Kernanordnung für drahtlose Energieübertragung nach Anspruch 7,
wobei der Kern mit einer Vielzahl von ersten Durchgangslöchern (129) bereitgestellt wird, durch welche beide Enden von jeder der Spulen hindurchdringen, und
die Leiterplatte (130) mit einer Vielzahl von zweiten Durchgangslöchern (127) bereitgestellt wird, die der Vielzahl von ersten Durchgangslöchern entspricht.

9. Kernanordnung für drahtlose Energieübertragung nach Anspruch 8, wobei die Vielzahl von ersten Durchgangslöchern mindestens ein Paar von Durchgangslöchern beinhaltet, die basierend auf der Mitte des Kerns zueinander symmetrisch sind.

10. Kernanordnung für drahtlose Energieübertragung nach Anspruch 8, wobei eine Oberfläche der Leiterplatte, die einer anderen Oberfläche davon, die dem Kern zugewandt ist, gegenüberliegt, eine Vielzahl von Anschlussteilen umfasst, die an beide Enden von jeder der Spulen angeschlossen sind, wobei die Anzahl von Anschlussteilen der Anzahl von Enden entspricht.

11. Kernanordnung für drahtlose Energieübertragung nach Anspruch 1, wobei die konkaven Teile Rillen (120a) beinhalten, die in einer unteren Oberfläche davon in eine Richtung ausgebildet sind, in welche die Spulen gewickelt sind, um Abschnitte der Spulen aufzunehmen, welche die untere Oberfläche darin berühren.

12. Energieversorgungsvorrichtung (100) für drahtlose Energieübertragung, umfassend:
die Kernanordnung für drahtlose Energieübertragung nach Anspruch 1; und
ein Gehäuse, das zum Umschließen der Kernanordnung ausgebildet ist.

## Revendications

1. Ensemble noyau pour transmission d'énergie sans fil comprenant :
un noyau en forme de plaque (120) constitué d'un matériau magnétique, le noyau en forme de plaque incluant des parties concaves (122, 123) prévues dans une surface principale de celui-ci ; et
une pluralité de bobines de type à enroulement (110) reçues dans les parties concaves et se chevauchant partiellement les unes les autres,
dans lequel les parties concaves incluent :
une première partie concave qui est formée à une première profondeur ayant un premier contour incurvé ; et
une seconde partie concave formée pour être en communication avec la première partie concave, la seconde partie concave est formée à une seconde profondeur ayant un second contour incurvé, la seconde profondeur étant moins profonde que la première profondeur, et
dans lequel les première et seconde parties concaves sont formées en étant évidées en une forme dans laquelle les contours de la première partie concave et de la seconde partie concave se chevauchent partiellement l'un l'autre ; et
une carte de circuit (130) est positionnée en dessous du noyau en forme de plaque, la carte de circuit étant connectée aux deux extrémités de chacune des bobines pour contrôler l'application d'une énergie aux bobines.

2. Ensemble noyau pour transmission d'énergie sans fil selon la revendication 1, dans lequel les parties au niveau desquelles contours de la première partie concave et de la seconde partie concave se chevauchent partiellement l'un l'autre sont évidées à la première profondeur.

3. Ensemble noyau pour transmission d'énergie sans fil selon la revendication 1, dans lequel les parties concaves (122, 123) incluent un fond (126) et une paroi latérale (125), et
les parties concaves sont évidées à une dimension permettant à une circonférence externe entièrement formée par la pluralité de bobines se chevauchant les unes les autres d'entrer en contact avec la paroi latérale.

4. Ensemble noyau pour transmission d'énergie sans fil selon la revendication 1, dans lequel les bobines sont enroulées en une forme ovale, respectivement.

5. Ensemble noyau pour transmission d'énergie sans fil selon la revendication 4, dans lequel la pluralité de bobines sont enroulées de sorte à avoir la même taille les unes les autres.

6. Ensemble noyau pour transmission d'énergie sans fil selon la revendication 1, dans lequel le noyau comprend au moins un support (127, 128) faisant saillie à partir de celui-ci, le support étant formé pour être inséré dans une partie creuse de la bobine.

7. Ensemble noyau pour transmission d'énergie sans fil selon la revendication 6, dans lequel au moins une section d'une section transversale du support est formée en une forme incurvée de sorte à entrer en contact avec une partie d'une surface circonférentielle interne de la partie creuse de la bobine.

8. Ensemble noyau pour transmission d'énergie sans fil selon la revendication 7,
dans lequel le noyau est pourvu d'une pluralité de premiers trous traversants (129) à travers lesquels pénètrent les deux extrémités de chacune des bobines, et
la carte de circuit (130) est pourvue d'une pluralité de seconds trous traversants (127) correspondant à la pluralité de premiers trous traversants.

9. Ensemble noyau pour transmission d'énergie sans fil selon la revendication 8, dans lequel la pluralité de premiers trous traversants incluent au moins une paire de trous traversants symétriques l'un par rapport à l'autre sur la base du centre du noyau.

10. Ensemble noyau pour transmission d'énergie sans fil selon la revendication 8, dans lequel une surface de la carte de circuit, opposée à une autre surface de celle-ci faisant face au noyau, comprend une pluralité de parties de connexion qui sont connectées aux deux extrémités de chacune des bobines, le nombre de parties de connexion correspondant au nombre d'extrémités.

11. Ensemble noyau pour transmission d'énergie sans fil selon la revendication 1, dans lequel les parties concaves incluent des gorges (120a) formées dans une surface inférieure de celles-ci dans une direction dans laquelle sont enroulées les bobines pour recevoir les parties des bobines en contact avec la surface inférieure.

12. Dispositif d'alimentation en énergie (100) pour transmission d'énergie sans fil comprenant :
l'ensemble noyau pour transmission d'énergie sans fil selon la revendication 1 ; et
un boîtier formé pour enfermer l'ensemble noyau.
